# NEUE EUROPÄISCHE PATENTSCHRIFT

(11) **EP 1 084 897 B2**
(45) Veröffentlichungstag und Bekanntmachung des Hinweises auf die Entscheidung über den Einspruch: **13.10.2010**
(45) Hinweis auf die Patenterteilung: 23.03.2005
(21) Anmeldenummer: 00110221.9
(22) Anmeldetag: 12.05.2000
(51) Int. Cl.: B60N 2/22, B60N 2/16

(54) **Verstellvorrichtung für einen Kraftfahrzeugsitz**
Adjusting device for a motor vehicle seat
Dispositif de réglage pour un siège de véhicule automobile

(30) Priorität: 18.09.1999 DE 19944866
(43) Veröffentlichungstag der Anmeldung: 21.03.2001
(73) Patentinhaber: C.Rob. Hammerstein GmbH & Co.KG, 42699 Solingen (DE)
(72) Erfinder: Becker, Burckhard, 42655 Solingen (DE); Wagener, Heinz-Jürgen, 42899 Remscheid (DE); Wingensiefen, Wilhelm, 42929 Wermelskirchen (DE)
(74) Vertreter: Bauer, Wulf

(56) Entgegenhaltungen:
- DE-A- 2 328 908
- DE-A- 3 319 813
- DE-A- 4 120 121
- DE-A- 19 502 333
- DE-A- 19 900 941
- DE-C- 856 103
- DE-C- 975 780
- DE-C- 975 780
- DE-C- 3 428 703
- DE-U- 29 801 025
- DE-U- 29 814 448
- FR-A- 848 742
- FR-A- 848 742
- GB-A- 1 117 220
- US-A- 5 882 061
- US-A- 5 934 153

## Beschreibung

Die Erfindung bezieht sich auf eine Verstellvorrichtung für einen Kraftfahrzeugsitz
- mit einem ersten Verstellarm,
- mit einem zweiten Verstellarm, der um eine Achse drehbar gegenüber dem ersten Verstellarm angeordnet ist,
- mit einer dem ersten Verstellarm zugeordneten Antriebswelle, die ein freies Ende hat und ein Ritzel trägt, und
- mit einem im zweiten Verstellarm ausgebildeten Zahnbogen, mit dem das Ritzel in Eingriff ist.

Derartige Verstelleinrichtungen für Kraftfahrzeugsitze sind allgemein bekannt, sie werden vielfältig eingesetzt (siehe z.B. DE 856 103 C).

Durch die Verstellvorrichtung wird ein Kraftfahrzeugsitz einstellbar in einer bestimmten Verstellposition gehalten. Wenn die Verstellvorrichtung beispielsweise einer Höhenverstellvorrichtung des Sitzbereiches gegenüber einer Bodengruppe zugeordnet ist, ist sie verantwortlich für die Höhenposition des Sitzbereiches, sie hält beispielsweise zwei Verstellarme in der vom Benutzer eingestellten Winkelposition. Fällt die Verstellvorrichtung aus, bricht beispielsweise die Achse des Ritzels oder kommt das Ritzel ausser Eingriff mit dem Zahnbogen, verändert sich die Position des Kraftfahrzeugsitzes. Dies kann bei unfallbedingten Verzögerungen des Kraftfahrzeugs, in dem der Kraftfahrzeugsitz angeordnet ist, zu erheblichen Verletzungen der Passagiere führen. Die Verstellvorrichtungen müssen daher auch den hohen, bei unfallbedingten Beschleunigungen auftretenden Kräften widerstehen können. Sie sollen aber dennoch nicht mit zu hohen Querschnitten dimensioniert sein, indem z.B. die Festigkeit durch eine möglichst starre Ausbildung der einzelnen Teile erzielt wird, weil dies einerseits das Gesamtgewicht des Kraftfahrzeugsitzes erhöht und andererseits diesen starr macht, sodass bei Unfällen ein Abbau von Bewegungsenergie durch das Gestell des Fahrzeugsitzes selbst praktisch nicht mehr stattfindet.

Hiervon ausgehend liegt der Erfindung die Aufgabe zugrunde, die Verstellvorrichtungen der eingangs genannten Art dahingehend weiterzubilden, dass ein Trennen des Eingriffs von Ritzel und Zahnbogen bei unfallbedingten Belastungen auch dann verhindert wird, wenn sich Ritzel und Zahnbogen gegeneinander bewegen.

Ausgehend von der Verstellvorrichtung der eingangs genannten Art wird diese Aufgabe gelöst durch die Merkmale des Anspruchs 1.

Das Abstützteil am zweiten Verstellarm bewirkt ein Widerlager für die Antriebswelle und behindert eine zu starke Verformung der Antriebswelle bei unfallbedingten Belastungen. Das Abstützteil kommt bei normalen Fahrsituationen nicht in Kontakt mit der Antriebswelle, es ist durch einen Luftspalt von ihr getrennt. Erst ab einer gewissen Verformung von Antriebswelle und/oder Zahnbogen kommt es zu einer Anlage der Antriebswelle an dem Abstützteil und damit zu einem Hindernis für ein weiteres Trennen des Ritzels vom Zahnbogen. Insoweit bietet das Abstützteil also eine zusätzliche Sicherheit, die sich bei normalem Fahrbetrieb nicht bemerkbar macht, die aber bei unfallbedingten Beschleunigungskräften einsetzt und dann eine zusätzliche Abstützung schafft. Durch Dimensionierung der einzelnen Teile kann der Schwellenwert berechnet und eingestellt werden, der für die Belastung vorliegen muss, damit es zu einem Kontakt zwischen Antriebswelle und Abstützteil kommt. Dieser Kontakt tritt bei einer deutlich geringeren Relativbewegung zwischen Ritzel und Zahnbogen ein, als für ein Ausrasten beider Teile notwendig ist.

Da das Abstützteil bei Normalbetrieb des Kraftfahrzeugs keinen Kontakt mit der Antriebswelle hat, sind besondere Genauigkeiten, präzise Ausbildung usw. nicht notwendig. Gegenüber einem zweiten Lager am freien Ende der Antriebswelle wird bei etwa vergleichbarer Sicherheit sehr viel eingespart, nämlich an Bauteilen, Montageaufwand und Gewicht. Der freie Abstand zwischen Antriebswelle und Abstützteil kann so bemessen sein, dass schon starke Auslenkungen der Teile der Verstellvorrichtung ausreicht, um die Antriebswelle am Abstützteil anschlagen zu lassen, wobei diese Auslenkungen noch im elastischen Bereich liegen. Es ist aber auch möglich und bevorzugt, dass der Luftspalt zwischen Abstützteil und Antriebswelle erst bei plastischen Deformationen der zugehörigen Teile überwunden wird. Dann ist ein Anschlag des Abstützteils an die Antriebswelle zugleich Indiz dafür, dass die betreffende Verstellvorrichtung und damit auch der Kraftfahrzeugsitz nach der Situation repariert bzw. ausgetauscht werden muss.

Die erfindungsgemässe Anordnung eines Abstützteils ermöglicht es, mit relativ wenig mechanischem Aufwand und möglicherweise ohne zusätzliches Gewicht und ohne zusätzliche Bauteile eine Abstützung zu schaffen, die sich auch bei den hohen, unfallbedingten Beschleunigungskräften eines Heckaufprallunfalls oder eines Frontalunfalls bewähren.

In einer besonders bevorzugten Weiterbildung ist das Abstützteil als ein Abstützbogen ausgebildet, der konzentrisch zur Achse der Verstellvorrichtung verläuft. Beim Verstellen der Verstellvorrichtung ändert das Ritzel seine Position entlang des Zahnbogens, damit verändert sich auch die Lage der Achse gegenüber dem zweiten Verstellarm. Durch das bogenförmig ausgebildete Abstützteil wird nun für jede Position der Achse relativ zum zweiten Verstellarm eine Abstützung erreicht.

In einer besonders bevorzugten Ausbildung ist die Antriebswelle in Nähe des Ritzels mit einer Scheibe verbunden, die sich bei normal belastetem Ritzel in der geringen Entfernung vom Abstützteil befindet und die bei stark belastetem Ritzel, insbesondere unfallbedingt belastetem Ritzel, am Abstützteil anliegt und sich dort abstützt. Durch diese Scheibe wird eine zusätzliche Sicherheit geschaffen. Die Bewegung des zweiten Verstellarms zum ersten Verstellarm hin wird durch Anschlagen beider Arme gegeneinander begrenzt. Dadurch kann der zweite Verstellarm sich nicht so weit vom ersten Verstellarm und damit vom Ritzel weg bewegen, dass das Ritzel axial ausser Eingriff mit dem Zahnbogen kommt.

In einer bevorzugten Ausführung ist der Zahnbogen an einem Randbereich eines bogenförmigen Langlochs im zweiten Verstellarm ausgebildet. Um dieses Langloch herum steht am zweiten Verstellarm ein geschlossen umlaufender Abstützbogen vor. Er bewirkt eine Abstützung der Achse und insbesondere der Scheibe quer zur Längsrichtung des Zahnbogens und zur Richtung der Achse.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser Zeichnung zeigen:
- Fig. 1:: eine perspektivische Darstellung einer Verstellvorrichtung für einen Kraftfahrzeugsitz,
- Fig. 2:: eine perspektivische Darstellung eines zweiten Verstellarms in einer alternativen Ausbildung zu Fig. 1 und
- Fig. 3:: ein Schnittbild durch eine Verstellvorrichtung in einer gegenüber Fig. 1 geänderten Ausführung.

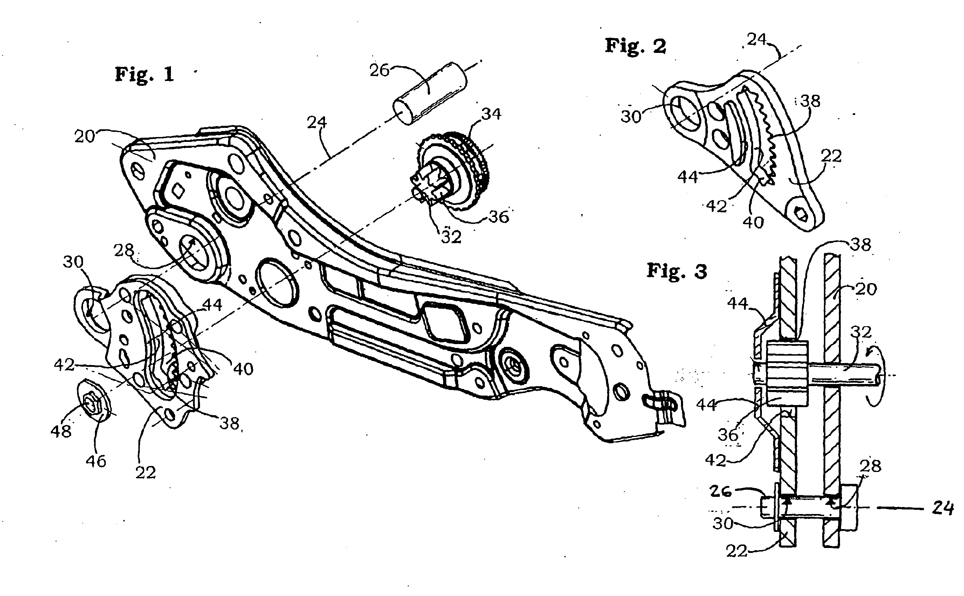

Die in Fig. 1 dargestellte Verstellvorrichtung für einen Kraftfahrzeugsitz hat einen ersten Verstellarm 20, der hier als ein Seitenteil eines Sitzträger ausgebildet ist. Weiterhin ist eine zweiter Verstellarm 22 vorgesehen. Letzterer ist um eine Achse 24 drehbar gegenüber dem ersten Verstellarm 20 angeordnet. Zur Ausbildung dieser Gelenkverbindung zwischen den beiden Verstellarmen 20, 22 durchgreift ein Achsstummel 26 eine Bohrung 28 im ersten Verstellarm 20 und eine Bohrung 30 im zweiten Verstellarm 22.

Im ersten Verstellarm 20 ist eine Antriebswelle 32 drehbar gelagert. Hierzu ist ein Gesperre in Form eines an sich bekannten Klemmrollenfreilaufs 34 dem ersten Verstellarm 20 zugeordnet. Auf seiner Abtriebsseite ist die Antriebswelle 32 vorgesehen, sie weist ein Ritzel 36 auf.

Im zweiten Verstellarm 22 ist ein Zahnbogen 38 ausgebildet, der zentrisch zur Achse 24 verläuft. Dieser Zahnbogen 38 hat Zähne, die mit den Zähnen des Ritzels 36 im Eingriff sind.

Der Zahnbogen 38 befindet sich innerhalb eines gekrümmt verlaufenden Langlochs 40. Der Zahnbogen 38 bildet gesehen von der Achse 24 den entfernten Rand 42 dieses Langlochs 40. Dem Zahnbogen 38 gegenüber liegt ein ebenfalls zur Achse 24 konzentrischer Rand des Langlochs 40, dieser Rand 42 hat jedoch keine Verzahnung. Innerhalb des Langlochs 40 kann der zweite Verstellarm 22 innerhalb eines gewissen Winkelbereichs gegenüber dem ersten Verstellarm 20 verstellt werden, durch das Langloch 40 wird der Winkelbereich definiert.

Am zweiten Verstellarm 22 ist ein Abstützteil 44 vorgesehen, es befindet sich an der vom ersten Verstellarm 20 abgewandten Seite des Zahnbogens 38.

Das Abstützteil 44 hat die Form eines Langlochs, das etwas länger und breiter ist als das Langloch 40, aber die gleiche Zentrumslinie wie das Langloch 40 hat. Dieses Abstützteil 44 ist so ausgebildet, dass die der Antriebswelle 32 zugeordnete Scheibe 46 einerseits in gleicher Ebene wie das Abstützteil 44 liegt und andererseits sich die Scheibe 46 normalerweise immer im Abstand vom Abstützteil 44 befindet. Das Abstützteil 44 berührt also im Normalfall weder den Innenbogen noch den Außenbogen, den das Abstützteil 44 definiert.

Als Abstützteil 44 wird ein vorspringender Rand verstanden, der radial zur Achse 24 der Antriebswelle 32 verläuft. Nur bei unfallbedingter Belastung der Verstellvorrichtung kommt er in Kontakt mit der Scheibe 46. Dann stützt sich der Umfangsrand der Scheibe 46 am Abstützteil 44 ab und verhindert ein weiteres Auslenken des freien Endes der Antriebswelle 32 gegenüber dem Zahnbogen 38.

Der Durchmesser der Scheibe 46 ist größer als die Breite des Langlochs 40. Diese Breite wird gemessen auf einer Radialen zur Achse 24. Aufgrund des so gemessenen Durchmessers der Scheibe 46 kann die Scheibe nicht durch das Langloch 40 hindurch gezogen werden. Bei einer unfallbedingten Belastung kann sie sich also auch im Bereich zwischen den Abstützteil 44 und dem Langloch 40 abstützen. Dieser Bereich ist als eine Schulter ausgebildet. Die Scheibe 46 hat auch einen größeren Durchmesser als der Außendurchmesser des Ritzel 36. Vorzugsweise ist der Durchmesser der Scheibe 46 mindestens 1,2 mal, insbesondere 1,5 mal größer als der Außendurchmesser des Ritzels 36.

Die Scheibe 46 befindet sich unmittelbar in Nähe des freien Endes der Antreibswelle 32. Die Antriebswelle 32 ist nur einseitig, nämlich im ersten Verstellarm 20, gelagert. Sie ist nicht im zweiten Verstellarm 22 oder einem Teil auf der dem ersten Verstellarm 20 gegenüberliegenden Seite des zweiten Verstellarms 22 gelagert.

Fig. 2 zeigt eine andere Ausbildung des zweiten Verstellarms 22. Hier ist das Abstützteil 44 nicht als ein gebogenes Langloch ausgebildet, sondern nur als ein Bogen, der sich zwischen dem Zahnbogen 38 und der Bohrung 30 befindet. Das so ausgeführte Abstützteil 44 verhindert ein Trennen des Ritzels 36 aus dem Zahnbogen 38. Dem entsprechend ist es so angeordnet, dass es ein Herausbewegen des Ritzels 36 aus den Zähnen des Zahnbogens 38 verhindert.

Im Ausführungsbeispiel nach Fig. 3 ist das Abstützteil 44 durch zwei abgewinkelte Bleche realisiert, die zwischen sich einen bogenförmig verlaufenden, zur Achse 24 zentrischen Spalt ausbilden. Durch einen Luftspalt getrennt befindet sich innerhalb des Spaltes der freie Endbereich der Antriebswelle 32. Bei einer unfallbedingten Auslenkung der Antriebswelle 32 schlägt diese gegen das obere oder untere Blech des Abstützteils 44. Wichtig ist hierbei das untere Blech des Abstützteils 44, weil beim Trennen des Ritzels 36 vom Zahnbogen 38 dieses Blech eine weitere Trennung behindert.

## Patentansprüche

1. Verstellvorrichtung für einen Kraftfahrzeugsitz
- mit einem ersten Verstellarm (20),
- mit einem zweiten Verstellarm (22), der um eine Achse (24) drehbar gegenüber dem ersten Verstellarm (20) angeordnet ist,
- mit einer dem ersten Verstellarm (20) zugeordneten Antriebswelle (32), die ein freies Ende hat und ein Ritzel (36) trägt, und
- mit einem im zweiten Verstellarm (22) ausgebildeten Zahnbogen (38), mit dem das Ritzel (36) in Eingriff ist,
**dadurch gekennzeichnet, dass** am zweiten Verstellarm (22) ein Abstützteil (44) ausgebildet ist, das a) sich in Nähe der Antriebswelle (32) befindet, das b) sich bei normal belastetem Ritzel (36) in einer geringen Entfernung von der Antriebswelle (32) radial außerhalb dieser befindet und das c) bei stark belastetem Ritzel (36), insbesondere unfallbedingt belastetem Ritzel (36), in Anlage an die Antriebswelle (32) kommt und diese abstützt, wobei das Abstützteil (44) einem Bereich der Antriebswelle (32) gegenüberliegt, der zwischen dem Ritzel (36) und dem freien Ende liegt.

2. Verstellvorrichtung nach Anspruch 1, **dadurch gekennzeichnet, dass** das Abstützteil (44) einen Abstützbogen aufweist, der konzentrisch zur Achse (24) verläuft, die sich bei normal belastetem Ritzel (36) in der geringen Entfernung vom Abstützteil (44) befindet und die bei stark belastetem Ritzel (36), insbesondere unfallbedingt belastetem Ritzel (36), am Abstützteil (44) anliegt und sich dort abstützt.

3. Verstellvorrichtung nach Anspruch 1, **dadurch gekennzeichnet, dass** die Antriebswelle (32) in Nähe des Ritzels (36) eine Scheibe (46) aufweist.

4. Verstellvorrichtung nach Anspruch 3, **dadurch gekennzeichnet, dass** die Scheibe (46) in Nähe des Ritzels (36) angeordnet und lösbar mit der Antriebswelle (32) verbunden ist.

5. Verstellvorrichtung nach Anspruch 3, **dadurch gekennzeichnet, dass** der Durchmesser der Scheibe(46) mindestens 1,2 mal, vorzugsweise mindestens 1,5 mal größer ist, als der Außendurchmesser des Ritzels (36).

6. Verstellvorrichtung nach Anspruch 1, **dadurch gekennzeichnet, dass** der Zahnbogen (38) an einem Randbereich eines bogenförmigen Langlochs (40) ausgebildet ist und dass um dieses Langloch (40) am zweiten Verstellarm (22) herum ein geschlossen umlaufender Abstützbogen vorsteht.

7. Verstellvorrichtung nach Anspruch 3, **dadurch gekennzeichnet, dass** der Zahnbogen (38) an einem Randbereich eines bogenförmigen Langlochs (40) ausgebildet ist und dass der Durchmesser der Scheibe (46) größer ist als die Breite des Langlochs (40).

8. Verstellvorrichtung nach Anspruch 1, **dadurch gekennzeichnet, dass** das Ritzel (36) an einer Antriebswelle (32) eines Getriebes oder Gesperres (34) angeordnet ist und dass sich der erste Verstellarm (20) zwischen diesem Getriebe oder Gesperre und dem zweiten Verstellarm (22) befindet.

## Claims

1. An adjusting device for a motor vehicle seat
- with a first adjusting arm (20),
- with a second adjusting arm (22) that is arranged to be rotatable about an axle (24) and relative to the first adjusting arm (20),
- with a drive shaft (32) allocated to the first adjusting arm (20) that has a free end and carries a pinion (36), and
- with a toothed quadrant (38) formed in the second adjusting arm (22) and meshing with the pinion (36),
**characterized in that** a supporting part (44) is formed on the second adjusting arm (22), wherein said supporting part (44) a) is located in the vicinity of the drive shaft (32), b) is positioned near the drive shaft (32) radially outside thereof when the pinion (36) is subjected to normal load and c) gets in contact with the drive shaft (32) and supports it when the pinion (36) is subjected to heavy load, particularly when the pinion (36) is subjected to a load occasioned by an accident, whereby the supporting part (44) is arranged opposite an area of the drive shaft (32) that is located between the pinion (36) and the free end.

2. An adjusting device according to claim 1, **characterized in that** the supporting part (44) is designed as a supporting arch, which exhibits a course that is concentric with the axle (24), which axle (24) is positioned near the supporting part (44) when the pinion (36) is subjected to normal load and comes in contact with the supporting part (44) and leans against it when the pinion (36) is subjected to heavy load, particularly when the pinion (36) is subjected to load occasioned by an accident.

3. An adjusting device according to claim 1, **characterized in that** the drive shaft (32) is provided with a disk (46) in the vicinity of the pinion (36).

4. An adjusting device according to claim 3, **characterized in that** the disk (46) is arranged in the vicinity of the pinion (36) and that it is removably connected to the drive shaft (32).

5. An adjusting device according to claim 3, **characterized in that** the diameter of the disk (46) is at least 1,2 times, in particular 1,5 times bigger than the outer diameter of the pinion (36).

6. An adjusting device according to claim 1, **characterized in that** the toothed quadrant (38) is formed on an edge area of an arch-shaped oblong hole (40) and that a salient supporting arch completely encircles said oblong hole (40) on the second adjusting arm (22).

7. An adjusting device according to claim 3, **characterized in that** the toothed quadrant (38) is formed on an edge area of an arch-shaped oblong hole (40) and that the diameter of the disk (46) is greater than the width of the oblong hole (40).

8. An adjusting device according to claim 1, **characterized in that** the pinion (36) is arranged on a drive shaft (32) of a gear or of a locking gear (34) and that the first adjusting arm (20) is located between said gear or locking gear and the second adjusting arm (22).

## Revendications

1. Dispositif de réglage pour un siège de véhicule automobile
- avec un premier bras de réglage (20),
- avec un deuxième bras de réglage (22) qui est disposé mobile en rotation autour d'un axe (24) par rapport au premier bras de réglage (20),
- avec un arbre d'entraînement (32) associé au premier bras de réglage (20) qui a une extrémité libre et qui porte un pignon (36) et
- avec un secteur denté (38) qui est formé dans le deuxième bras de réglage (22) et avec lequel le pignon (36) est en prise,
**caractérisé en ce qu'**il est prévu sur le deuxième bras de réglage (22) une pièce support (44) a) se trouvant à proximité de l'arbre d'entraînement (32), b) se situant radialement à l'extérieur de l'arbre d'entraînement (32) à faible distance de celui-ci lorsque le pignon (36) est soumis à une charge normale et c) venant en appui contre l'arbre d'entraînement (32) et supportant celui-ci lorsque le pignon (36) est soumis à une charge importante, notamment lorsque le pignon (36) est soumis à une charge provoquée par un accident, la pièce support (44) est située en regard d'une partie de l'arbre d'entraînement (32) située entre le pignon (36) et l'extrémité libre.

2. Dispositif de réglage selon la revendication 1, **caractérisé en ce que** la pièce support (44) comporte un support en forme d'arc concentrique à l'axe (24) qui se situe à faible distance de la pièce support (44) lorsque le pignon (36) est soumis à une charge normale et qui, lorsque le pignon (36) est soumis à une charge importante, notamment lorsque le pignon (36) est soumis à une charge provoquée par un accident, est en contact avec la pièce support (44) sur laquelle il prend appui.

3. Dispositif de réglage selon la revendication 1, **caractérisé en ce que** l'arbre d'entraînement (32) comporte une rondelle (46) à proximité du pignon (36).

4. Dispositif de réglage selon la revendication 3, **caractérisé en ce que** la rondelle (46) est disposée à proximité du pignon (36) et est solidarisée de façon amovible à l'arbre d'entraînement (32).

5. Dispositif de réglage selon la revendication 3, **caractérisé en ce que** le diamètre de la rondelle (46) est au moins 1,2 fois, de préférence 1,5 fois supérieur au diamètre extérieur du pignon (36).

6. Dispositif de réglage selon la revendication 1, **caractérisé en ce que** le secteur denté (38) est formé sur une zone en bordure d'un trou oblong incurvé (40) et qu'un support en forme d'arc s'étendant sur toute la circonférence de ce trou oblong (40) fait saillie sur le deuxième bras de réglage (22).

7. Dispositif de réglage selon la revendication 1, **caractérisé en ce que** le secteur denté (38) est formé sur une zone en bordure d'un trou oblong incurvé (40) et que le diamètre de la rondelle (46) est supérieur à la largeur du trou oblong (40).

8. Dispositif de réglage selon la revendication 1, **caractérisé en ce que** le pignon (36) est disposé sur un arbre d'entraînement (32) d'un engrenage ou d'un encliquetage (encliquetage à galet (34)) et que le premier bras de réglage (20) se situe entre cet engrenage ou encliquetage et le deuxième bras de réglage (22).
